# EUROPEAN PATENT APPLICATION

(11) **EP 4 091 438 A1**
(43) Date of publication of application: **23.11.2022**
(21) Application number: 21175298.5
(22) Date of filing: 21.05.2021
(51) Int. Cl.: A01G 9/24, A01G 31/02

(54) **OPTICAL ELEMENT AND MOUNT SYSTEM FOR A HYDROPONIC SYSTEM, AND HYDROPONIC SYSTEM THEREWITH**

(71) Applicant: BSH Hausgeräte GmbH, 81739 München (DE)
(72) Inventor: Dornik, Primoz, 3270 Lasko (SI); Holcinger, Tadej, 3220 Store (SI); Koell, Martin, 83362 Surberg (DE); Leng, Sascha, 80339 München (DE); Longhino, Werner, 84561 Mehring (DE); Scheffelmeier, Marco, 80687 München (DE); Tan, E-Lin, 85591 Vaterstetten (DE); Terrádez Alemany, Maria, 80469 München (DE)

(57) **Abstract**

Disclosed is an optical element 1, 1' for a hydroponic system 100 comprising a top lamp 20 and a mount system 10 holding the top lamp 20. The optical element comprises at least one lightguide portion 2, 2' configured to be placed, through one or more openings/s O of a housing component 4, 4' of the mount system 10, on or over one or more light source/s 13, 13' facing the one or more openings O and being mounted on a printed circuit board 12, 12' arranged within the housing component 4, 4'. In such position, the lightguide portion 2, 2' is further configured to focus light of the one or more light source/s 13, 13' to an exterior environment of the housing component 4, 4'.

Further disclosed are a mount system component 11, 11' comprising such optical element 1, 1', and a hydroponic system 100 comprising one or more such mount system component/s 11, 11'.

## Description

The present invention concerns an optical element for a hydroponic system. The invention further concerns a mount system component of a hydroponic system, and a hydroponic system.

Indoor cultivation of plants is not only established in the field of professional economic gardening, but also popular in domestic planting for the purpose of decoration, generation of an advantageous indoor climate and/or personal production of spices or other ingredients for cooking or baking. In particular, sophisticated hydroponic systems may be used, which may facilitate automatic monitoring and control of parameters influencing the growth and health of the respective plants.

In known hydroponic systems, the respective plant(s) grow in soil or in a substrate (such as a medium containing an expanded clay aggregate and/or rock wool, for instance) held in a plant tray which is placed or placeable in or on a watering tank containing water. In particular, the soil or substrate may be contained in respective capsules which may be held in a capsule holder placed (preferably detachably) in the plant tray.

A pump unit is typically configured to pump water (which may be enriched with nutritive substances) from the watering tank into the plant tray, thus automatically facilitating care of the respective plant(s). The watering tank may have an allocated position on a base station of the hydroponic system. In these cases, to improve convenience of the system, e.g., to simplify care and harvest of the plants, the watering tank may advantageously be adapted to be taken off the base station.

A top lamp may be held, by a mount system, above the respective plant(s), so as to ensure a sufficient photosynthesis thereof even if the hydroponic system is placed at a location not adequately illuminated by sun light. Preferably, the top lamp and a drive unit (such as an electric motor) for the pump unit are connectable, via a common electrical connection, to an electric supply network.

It is an object of the present invention to provide a technique facilitating an improved hydroponic system.

The object is achieved by an optical element according to claim 1, by a mount system component according to claim 7 and by a hydroponic system according to claim 8. Advantageous embodiments are disclosed in the dependent claims, the description and the figures.

An optical element according to the present invention is devised for or belongs to a hydroponic system comprising a top lamp and a mount system holding the top lamp. The optical element comprises at least one lightguide portion configured to be (preferably detachably) placed, through one or more openings/s in a housing component of the mount system, on or over one or more light source/s (such as light-emitting diode/s) mounted, so as to face the one or more openings, on a printed circuit board arranged within the housing component. In particular, such placed, the optical element (in particular the lightguide portion thereof) may preferably close the one or more opening/s. For instance, it may extend through the opening/s.

The term "on or over" in the expression "placed on or over" in this document does not necessarily refer to a vertical orientation, but is to be understood with respect to a direction in which the lightguide portion is moved, when placed, towards the light source/s, which direction is considered as from above the printed circuit board downwards.

Such placed on or over, the lightguide portion may have direct contact with the light source/s or may be arranged with a positive distance from the light source/s. In particular, the lightguide portion may be put over the light source/s, so as to also at least partially surround it/them laterally. In particular, when placed on or over the one or more light source/s, the lightguide portion may contact the printed circuit board and/or at least one of the one or more light source/s.

The mount system may comprise one or more mount system components, which may be configured to be combined with each other such as to modify a height at which the top lamp is respectively positioned, in a designated orientation of utilisation of the hydroponic system, above a plant tray of the hydroponic system. The housing component may form part of one of such mount system components.

The lightguide portion of an optical element according to the present invention is further configured to focus, when arranged in said position, light of the one or more light source/s to an exterior environment of the housing component.

In particular, the lightguide portion may be configured to focus said light into a predetermined angular range (about the mount system). Preferably, such angular range covers a cylinder sector with a central angle (at the one or more light source/s) of at most 180° or at most 160°, and/or of at least 105°, at least 120° or at least 135°.

The optical element according to the present invention thus allows the mount system to advantageously illuminate, with the one or more light sources arranged within the housing component and through the at least one opening therein, plants eventually growing in the plant tray of the hydroponic system. Therein, the illumination may be made further (simultaneously) to that provided by the top lamp or (selectively) alternatively to that of the top lamp, such as depending on a respective growing stage of the plant/s. Thereby, an advantageous homogeneous light distribution to the respective plants may be achieved, which may stimulate growth and health of the plants. Moreover, due to the position of the light source/s and the focussing of their light, a loss of light and an undesired illumination of an environment of the hydroponic system can be prevented.

A mount system component according to the present invention is a component of a mount system holding a top lamp of a hydroponic system. In cases of a one-piece mount system, the mount system component may form the entire mount system, whereas in cases of various combinable components together forming the mount system, said mount system component may be one of these various components. In particular, the mount system component may be configured to be combined (such as by means of a screwing system and/or by means of a plug system) with at least one further component of the mount system, such as to alter a distance at which the top lamp is placed from a plant tray of the hydroponic system (which altering may be advantageous to adapt the position of the top lamp to a respectively current growing stage of the plant/s). Additionally or alternatively, the mount system component may itself be prolongable, such as by means of a telescope mechanism the mount system component may include.

The mount system component according to the present invention comprises a housing component with at least one opening, a printed circuit board arranged within the housing component and having mounted thereon one or more light sources (such as light-emitting diode/s) facing the at least one opening, and a matching optical element according an embodiment of the present invention. In particular, the lightguide portion of the optical element thus is adapted to be placed, through the one or more opening/s, on or over the one or more light source/s, and to focus light of the one or more light source/s to an exterior environment of the housing component.

A hydroponic system according to the present invention comprises a watering tank, a plant tray, a top lamp configured to illuminate the plant tray, and a mount system holding the top lamp. Therein, the mount system comprises at least one mount system component according to an embodiment of the present invention.

Therein, the lightguide portion of the optical element is preferably configured to focus light of the one or more light sources towards a region above the plant tray. In particular, the exterior environment to which the lightguide portion of the optical element is configured to focus light of the one or more light source may preferably include an angular range covering an area of at least 80% or at least 90% of an extension of the plant tray. Thereby, a particularly advantageous illumination of plants eventually held by the plant tray can be achieved.

According to advantageous embodiments, with regard to a designated orientation of utilisation of the hydroponic system, the mount system (in particular said mount system component comprising the optical element) is arranged laterally to the plant tray, i.e., at a side thereof.

The hydroponic system may further comprise a pump unit configured to pump water from the watering tank to the plant tray, and/or a capsule holder with at least one capsule holder opening configured to receive a respective capsule containing a soil or substrate for at least one respective plant rooting therein.

Moreover, the hydroponic system may comprise an electrical connection for connecting the top lamp and/or - in respective embodiments - a drive unit for the pump unit to an electric supply network. Such electrical connection may be fixed to the watering tank. Alternatively or additionally, in embodiments further comprising a base station with an allocated position for the watering tank (and preferably a corresponding coupling), the electrical connection may be fixed to the base station.

Preferably, the at least one lightguide portion of the optical element is monolithic.

According to advantageous embodiments of the present invention, the at least one lightguide portion of the optical element comprises at least one batwing lens. Such batwing lens may comprise a respective paraboloidal inner focus region which may preferably be positioned on or over a respective one of the light source/s. Thereby, an advantageous light distribution can be achieved, as light in particular is directed laterally, towards an edge of the focus.

Additionally or alternatively, the at least one lightguide portion of the optical element may comprise at least one bulbous lens; such lens may thus have an essentially round bodied shape. Preferably, it may have a paraboloidal focus. Such bulbous lens may provide for an advantageous direction of light rays emitted by the respective light source the bulbous lens is placed on or over.

In such embodiments, the at least one bulbous lens may preferably be entirely or at least partially framed by a portion of the housing component. In particular, such bulbous lens may close a respective opening in the housing component and/or extend therethrough. As a consequence, the printed circuit board may be invisible from outside the mount system.

Additionally or alternatively, the at least one bulbous lens may preferably have a recess configured to receive a respective one of the one or more light source/s when the lightguide portion is placed thereon or thereover. Thereby, a particularly advantageous focussing and a space saving arrangement can be realised.

According to advantageous embodiments of the present invention, the optical element further comprises a clip portion configured to detachably fix the at least one lightguide portion to the housing component. The clip portion may be separate or separable from the at least one lightguide portion; in this case the clip portion and the lightguide portion thus are at least two different elements. Alternatively, at least a part of the clip portion may be permanently connected to the lightguide portion, which thus both form part of a single common piece. In particular, the lightguide portion and said part may be monolithic.

The clip portion may comprise one or more snap fit/s and/or one or more magnets for detachable fixation of the lightguide portion to the housing component.

In the following, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not defined again for each figure.

Shown is schematically in
- Fig. 1a:: an exemplary embodiment of a hydroponic system according to the present invention;
- Fig. 1b:: a portion of hydroponic system according to the present invention from above the plant tray;
- Fig. 2a:: a mount system component according to a first exemplary embodiment of the present invention in a sectional view;
- Fig. 2b:: the lightguide portion of the mount system component of Figure 2a in a perspective view;
- Fig. 3a:: a mount system component according to a second exemplary embodiment of the present invention in a sectional view; and
- Fig. 3b:: the optical element of the mount system component of Figure 3a.

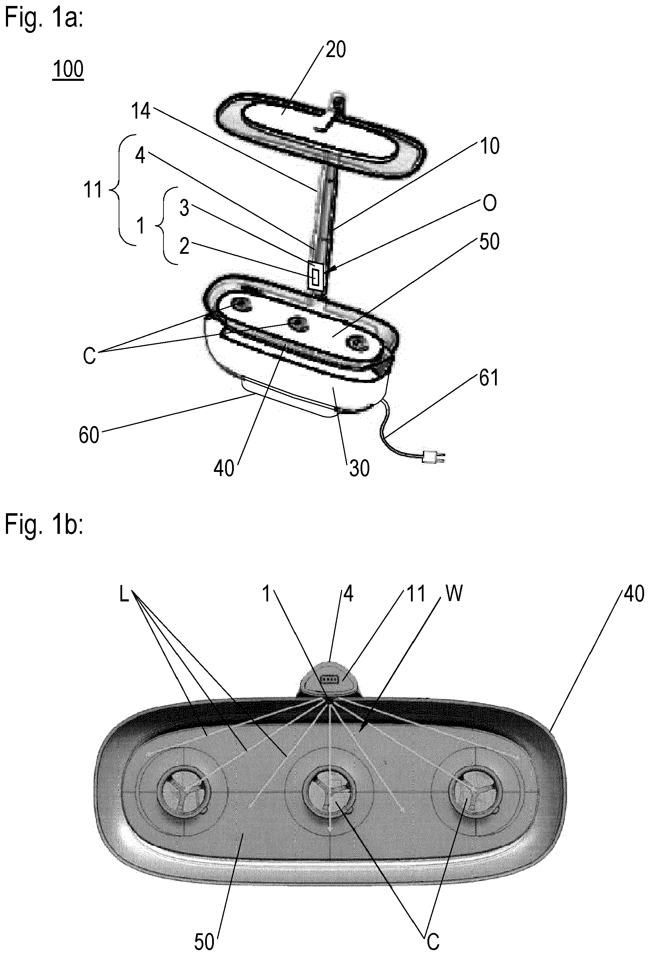

In Figure 1a, a hydroponic system 100 according to an exemplary embodiment of the present invention is shown in a perspective view and in a designated orientation of utilisation. The hydroponic system 100 comprises a plant tray 40 holding a capsule holder 50 with openings C for receiving respective plant capsules (with soil or substrate, and preferably with at least one plant and/or seed contained therein), a watering tank 30 and a base station 60.

In the situation depicted, the plant tray 40 is (advantageously removably) placed on the watering tank 30 which is positioned, at a designated position thereof, on the base station 60. The base station 60 preferably comprises a drive unit (not shown) configured to drive - via a coupling (not shown) - a pump unit (not shown) for pumping water from the watering tank 30 to the plant tray 40. To provide the drive unit with electric energy, the base station 60 is connectable, via an electric connection 61, to an electric supply network (not shown). As is to be noted, according to other (not shown) embodiments on the present invention, the watering tank itself may comprise a drive unit for driving a pump unit, and an electric connection for providing the drive unit with electric energy.

The hydroponic system 100 further comprises a top lamp 20 held by a mount system 10 and configured to illuminate from above plants (not shown) growing in the plant tray 40.

Although not visible due to the perspective of Figure 1a, the mount system 10 in the present case may be fixed to the base station 60 and/or to the watering tank 30. Via the mount system 10, one or more illuminant/s of the lamp 20 is/are preferably connected to the electric connection 61. Alternatively or additionally, the top lamp 20 may comprise a battery and/or accumulator for providing the illuminant/s with electric energy.

The mount system 10 comprises a mount system component 11 according to an exemplary embodiment of the present invention. Moreover, the mount system 10 comprises at least one further component 14. For instance, mount system 10 may be configured as a plug system, with the mount system component 11 and the at least one further component 14 configured to be plugged together so as to vary a height at which the top lamp 20 is held above the plant tray 40. Alternatively or additionally, the mount system 10 may comprise at least one telescopic element, or may be itself (on the whole) extendible.

The mount system component 11 shown in Figure 1a comprises a housing component 4 forming a housing structure of the mount system component and having an opening O in which a printed circuit board holding at least one light source (such as at least one light-emitting diode (LED)) is arranged (not visible in Figure 1a). Electric connection wires (not shown) of the printed circuit board preferably run through the housing component 4, which in particular may be at least partially hollow.

The mount system component 11 further includes an optical element 1 according to an exemplary embodiment of the present invention. The optical element 1 comprises a lightguide portion 2 and a clip portion 3 fastening the lightguide portion 2 to the housing component 4. Thereby, the opening O is closed. By means of the clip portion 3, the optical element 1 preferably can be selectively clipped on or off the housing structure 4. The clip portion 3 itself may be fixable/ fixed to the housing component 4 by means of one or more snap fit/s and/or one or more magnet/s.

As is seen from Figure 1a, by means of the clip portion 3, the optical element 1 is fastened to the housing component 4 so as to face the plant tray. Thereby, the optical element 1 is configured to focus light originating from the at least one light source in the interior of the housing component 4 to an exterior environment of the housing component and, therewith, towards plants eventually growing in the plant tray 40, whereas the light is inhibited to propagate at directions away from the plants. In particular, light of the one or more light source/s is kept away from an interior of the mount system component. Thus, loss of light inside the housing component 4 is prevented, the light distribution is amplified towards a place where it is needed, and disturbing lateral or rearward light is obviated.

In Figure 1b, the light tray 40 and a (plug) end of the mount system component 11 are shown from above (with respect to the designated orientation of utilisation of the hydroponic system). As illustrated in Figure 1b, the light L originating from one or more light source/s (not visible in Figure 1b) in the interior of the housing component 4 is focussed, by the optical element 1, into an angular range W of an environment of the mount system component 11 (and therewith, of the mount system 10 shown in Figure 1a).

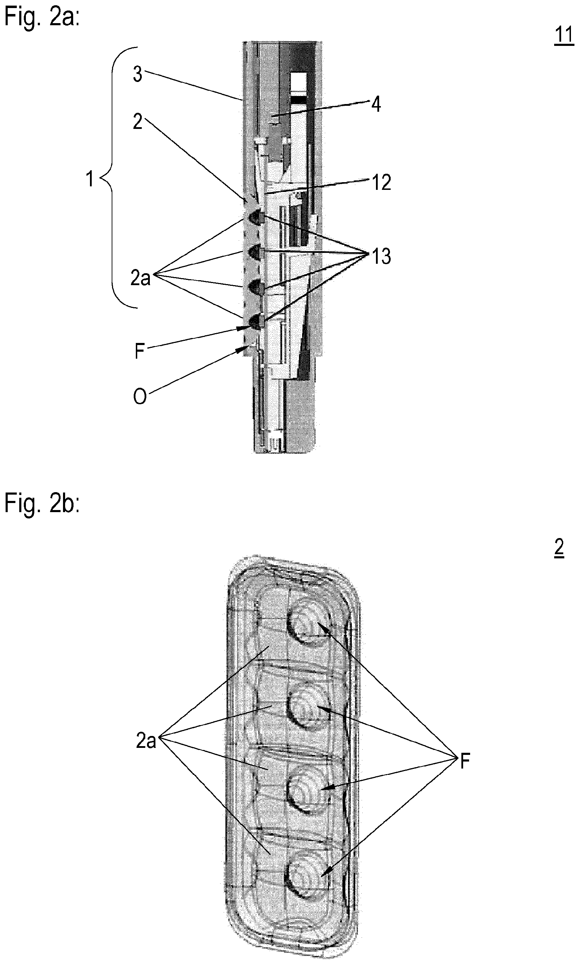

Figure 2a shows a sectional view of the mount system component 11, wherein the section is taken in a longitudinal direction thereof. It provides an insight into the housing component 4 with its opening O in which the printed circuit board 12 mounting - presently four - light sources 13 is arranged. For instance, one or more of the light sources (at least one of which may be an LED) may be configured to provide red light and/or one or more of the light sources may be configured to provide blue light.

The optical element 1 comprises a lightguide portion 2 and a clip portion 3 which in this case is an element separate from the lightguide portion 2. In the situation depicted in Figure 2a, the clip portion 3 detachably fixes the lightguide portion 2 to the housing component 4.

The lightguide portion 2 of the exemplary embodiment shown comprises four batwing lenses 2a with a respective paraboloidal inner focus F. In the situation shown in Figure 2a, the lightguide portion 2 of the optical element 1 has been placed, through the opening O, over the light sources 13. In particular, the batwing lenses 2a with their respective paraboloidal inner focuses F each are put over a respective one of the light sources. Thereby, an advantageous light distribution can be achieved, as by the batwing lenses 2a, light in particular is directed laterally, towards an edge of the focus.

Figure 2b shows the lightguide portion 2 with its batwing lenses 2a and their respective paraboloidal inner focuses F separately and in a perspective view.

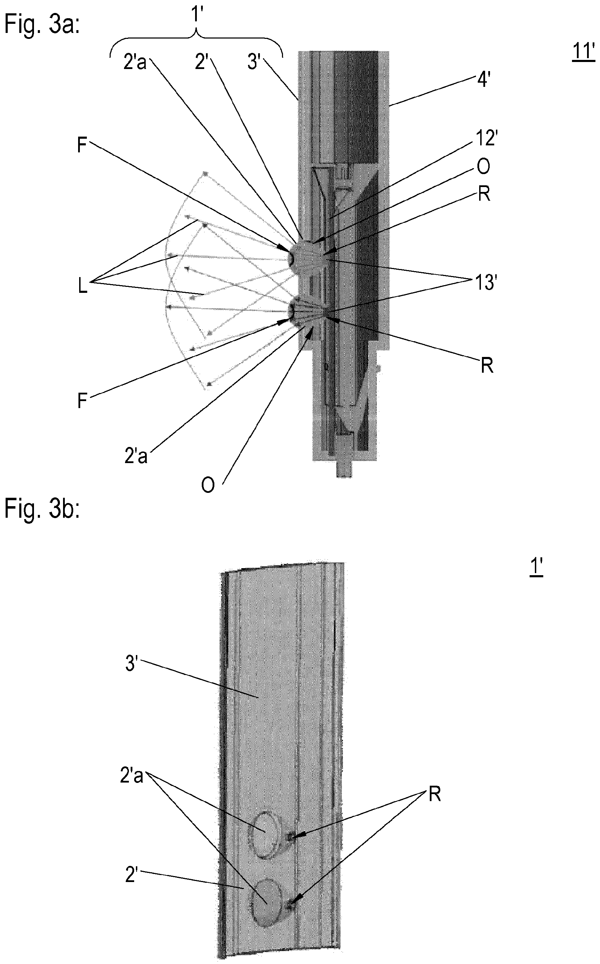

In Figure 3a, a mount system component 11' according to an alternative embodiment of the present invention is shown in a sectional view, wherein the section is taken in a longitudinal direction thereof. It provides an insight into the housing component 4' in which the printed circuit board 12' is arranged and which in this case has two openings O. In the case shown, the printed circuit board 12' mounts two light sources 13' (at least one of which may be an LED). For instance, at least one of the light sources may be configured to provide red light and/or at least one of the light sources may be configured to provide blue light.

The optical element 1' comprises a lightguide portion 2' and a clip portion 3'. The clip portion 3' may be fixable/ fixed to the housing component 4' by means of one or more snap fit/s and/or one or more magnet/s (not shown). Apart from such possible connection means, the clip portion 3' in this embodiment is permanently connected with the lightguide portion; lightguide portion 2' and at least a part of clip portion 3' thus form a one-piece component. In particular, the optical element 1' may be monolithic.

The lightguide portion 2' of the optical element 1' shown in Figure 3a comprises two bulbous lenses 2'a each having a respective recess R at their side facing the printed circuit board 12'. In the situation depicted in Figure 3, the lightguide portion 2' has been placed on the light sources 13'. Therein, each of the bulbous lenses 2'a runs through a respective one of openings O, and is thus framed by a portion of the housing component 4'. Thereby, in particular, the printed circuit board 12' is masked.

Moreover, the lightguide portion 2' is placed such that each recess R at least partially accommodates a respective one of the light sources 13'. Thereby, the light emitted - in operation - by the light sources 13' is fully or at least almost fully fed into the lightguide portion 2' and focussed thereby to an exterior environment of the housing component 4'. In particular, a light loss in the interior of the housing component 4' and/or an undesired illumination of a backside of the mount system are prevented. By contrast, the bulbous lenses 2'a with their respective (preferably paraboloidal) focus F provide for a projection of light L in front of the mount system component 11' and, therewith, an advantageous light distribution among plants eventually growing in a plant tray as that shown in Figures 1a, 1b.

Disclosed is an optical element 1, 1' for a hydroponic system 100 comprising a top lamp 20 and a mount system 10 holding the top lamp 20. The optical element comprises at least one lightguide portion 2, 2' configured to be placed, through one or more openings/s O of a housing component 4, 4' of the mount system 10, on or over one or more light source/s 13, 13' facing the one or more openings O and being mounted on a printed circuit board 12, 12' arranged within the housing component 4, 4'. In such position, the lightguide portion 2, 2' is further configured to focus light of the one or more light source/s 13, 13' to an exterior environment of the housing component 4, 4'.

Further disclosed are a mount system component 11, 11' comprising such optical element 1, 1', and a hydroponic system 100 comprising one or more such mount system component/s 11, 11'.

### Reference signs

- 1, 1': optical element
- 2, 2': lightguide portion
- 2a: batwing lens
- 2'a: bulbous lens
- 3, 3': clip portion
- 4, 4': housing component

- 10: mount system
- 11, 11': mount system component
- 12, 12': printed circuit board
- 13, 13': light source

- 20: top lamp
- 30: watering tank
- 40: plant tray
- 50: capsule holder
- 60: base station
- 61: electric connection

- 100: hydroponic system

- C: opening for plant capsule
- F: focus
- L: light
- O: opening in housing component 4, 4'
- R: recess in bulbous lens 2'a

## Claims

1. Optical element (1, 1') for a hydroponic system (100) comprising a top lamp (20) and a mount system (10) holding the top lamp (20), the optical element comprising at least one lightguide portion (2, 2') configured
- to be placed, through one or more openings/s (O) in a housing component (4, 4') of the mount system (10), on or over one or more light source/s (13, 13') mounted on a printed circuit board (12, 12') arranged within the housing component (4, 4'), the one or more light source/s (13, 13') facing the one or more openings (O); and
- in such position, to focus light of the one or more light source/s (13) to an exterior environment of the housing component (4, 4').

2. Optical element according to claim 1, wherein the at least one lightguide portion (2) comprises at least one batwing lens (2a).

3. Optical element according to one of claims 1 or 2, wherein the at least one lightguide portion (2') comprises at least one bulbous lens (2'a).

4. Optical element according to claim 3, wherein the at least one bulbous lens (2'a) has a recess (R) configured to receive a respective one of the one or more light source/s (13) when the lightguide portion (2') is placed thereon or thereover.

5. Optical element according to one of the preceding claims, wherein the optical element further comprises a clip portion (3, 3') configured to detachably fix the at least one lightguide portion (2, 2') to the housing component (4, 4'), wherein
- the clip portion (3) is separate or separable from the at least one lightguide portion (2) or
- at least a part of the clip portion (3') is permanently connected to the lightguide portion (2').

6. Optical element according to claim 5, wherein the clip portion (3, 3') comprises one or more snap fit/s and/or one or more magnets for fixation of the lightguide portion (2, 2') to the housing component (10).

7. Mount system component (11, 11') of a mount system (10) holding a top lamp (20) of a hydroponic system (100), the mount system component (11, 11') comprising a housing component (4, 4') with one or more opening (O), a printed circuit board (12, 12') arranged within the housing component and having mounted thereon one or more light sources (13, 13') facing the one or more opening/s, and a matching optical element (1, 1') according to one of the preceding claims.

8. Hydroponic system (100) comprising
- a watering tank (30),
- a plant tray (40),
- a top lamp (20) configured to illuminate the plant tray (40), and
- a mount system (10) holding the top lamp (20), wherein the mount system (10) comprises one or more mount system component/s (11, 11') according to claim 7.
